# EUROPEAN PATENT SPECIFICATION

(11) **EP 3 032 819 B1**
(45) Date of publication and mention of the grant of the patent: **26.06.2019**
(21) Application number: 15818423.4
(22) Date of filing: 09.02.2015
(51) Int. Cl.: H04N 5/225, H04N 5/232, H04N 5/33, G08B 13/196, H04N 5/235

(54) **FISHEYE CAMERA WITH INFRARED LAMP**
FISCHAUGENKAMERA MIT INFRAROTLAMPE
CAMÉRA À TRÈS GRAND ANGULAIRE AVEC LAMPE À INFRAROUGE

(30) Priority: 11.07.2014 CN 201420385848 U
(43) Date of publication of application: 15.06.2016
(73) Proprietor: Hangzhou Hikvision Digital Technology Co., Ltd., Hangzhou 310051 (CN)
(72) Inventor: WANG, Gangqiang, Hangzhou Zhejiang 310051 (CN); YING, Liang, Hangzhou Zhejiang 310051 (CN); GUO, Lichen, Hangzhou Zhejiang 310051 (CN); CHENG, Guangwei, Hangzhou Zhejiang 310051 (CN)
(74) Representative: V.O.
(86) International application number: PCT/CN2015/072512
(87) International publication number: WO 2016/004761

(56) References cited:
- EP-A1- 1 830 307
- EP-A2- 1 830 565
- CN-A- 103 297 661
- CN-U- 201 608 782
- CN-U- 202 818 504
- CN-U- 203 279 068
- CN-U- 203 968 223
- US-A1- 2008 122 927
- US-A1- 2009 289 187

## Description

### FIELD OF THE INVENTION

The present application generally relates to video monitoring technologies, in particular to a fisheye camera having infrared lamps.

### BACKGROUND OF THE INVENTION

At present, in order to realize a panorama view or monitoring without dead angle in a range of 360° independently, a camera having a fisheye lens is commonly used to shoot, and in order to cooperate with night shot of the fisheye lens, the fisheye camera needs to cooperate with an infrared lamp. Since an array of common infrared lamps can only illuminate an object in front of the infrared lamps in a certain angle range, a condensing lens located in the front of the array of the infrared lamps is required to be added in the fisheye camera, thereby realizing an irradiation in a shooting range of the fisheye lens. However, such structure of the array of the infrared lamps cooperating with the lens makes the structure design of the fisheye camera more complicated, and necessarily influences an appearance of the camera.

EP1830307A1 discloses a fisheye camera according to the precharacterizing portion of independent claim 1 of the present invention.

EP1830565A2, US2009/289187A1 and US2008/122927A1 disclose examples of other types of devices, each having some features in common with the present invention.

### SUMMARY

The present application provides a fisheye camera having infrared lamps. A structure of the fisheye camera is simplified and an appearance of the fisheye camera can be improved by using the infrared lamps having a lens.

The present invention provides a fisheye camera according to independent claim 1. Preferable embodiments of the present invention are provided by dependent claims 2-7.

In accordance with the above technical solutions, the fisheye camera of the present application uses the infrared lamps having the lens as a night illuminating lamp. The conventional lens used in the array of the infrared lamps, which is required to be individually disposed, is disassembled in each of the infrared lamps to be individually used, and is integrated with each of the infrared lamps. Whereby the structure of the fisheye camera is greatly simplified, a condensing effect of the condensing lens is improved, and an overlap irradiation among the plurality of infrared LEDs is avoided.

In addition, there is an angle α between the central line of the fisheye lens and the central line of each of the infrared lamps, and an irradiating angle of each of the infrared lamps can be in a shooting range of the fisheye lens by adjusting the angle α. The number and interval of the infrared lamps can be disposed according to the irradiating angles of the infrared lamps, by which a combination of the plurality of infrared lamps can fully irradiate the shooting range of the fisheye lens and decrease the overlap irradiation area between the adjacent infrared lamps. The influence to the image shooting caused by an excessive brightness of the local lamplight can be eliminated by decreasing the overlap irradiation area.

### BRIEF DESCRIPTION OF THE DRAWINGS

The aforementioned implementation of the invention as well as additional implementations will be more clearly understood as a result of the following detailed description of the various aspects of the invention when taken in conjunction with the drawings. Like reference numerals refer to corresponding parts throughout the several views of the drawings.
Fig. 1 is an exploded schematic view of a fisheye camera having infrared lamps.
Fig. 2 is a sectional view of the fisheye camera having the infrared lamps.

### DETAILED DESCRIPTION OF THE INVENTION

In order to describe the purpose, technical solutions and advantages of the invention more clearly, figures and embodiments are included to describe the invention in detail.

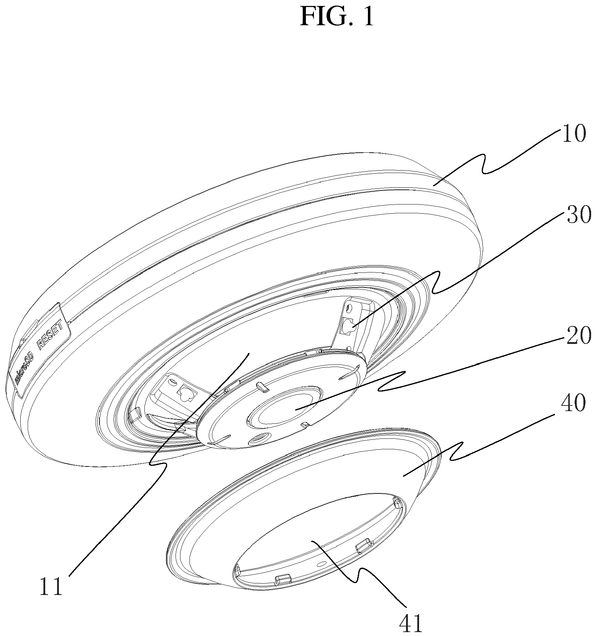

As shown in Fig. 1, the present application provides a fisheye camera having infrared lamps. The fisheye camera comprises a camera body 10, a fisheye lens 20 and a plurality of infrared lamps 30. Wherein the fisheye lens 20 is disposed at a front end of the camera body 10, the plurality of infrared lamps 30 are spaced from each other at equal angle, and are disposed at an outside of the fisheye lens 20 to irradiate the shooting range of the fisheye lens 20.

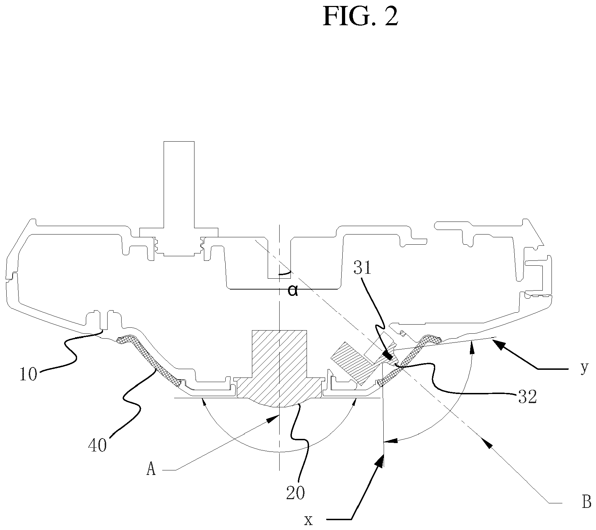

As shown in Fig.2, each of the infrared lamps 30 comprises an infrared light emitting diode (LED) 31 and a transparent housing 32 enclosing the infrared LED. Wherein the transparent housing 32 is a condensing lens, and condenses a divergent infrared lamplight of the infrared LED in a certain angle range, thereby avoiding the problem that the shooting range cannot be illuminated due to the divergent lamplight. The function of the transparent housing 32 is the same as that of the conventional lens used individually in an array of infrared lamps, but a volume of the transparent housing 32 is much less than that of the conventional lens.

In accordance with the above technical solutions, the fisheye camera of the present application uses the infrared lamp having lens as a night illuminating lamp. The conventional lens used in the array of infrared lamps, which is required to individually disposed, is disassembled in each of the infrared lamps to be individually used, and is integrated with each of the infrared lamps. Whereby the structure of the fisheye camera is greatly simplified. The condensing lens 32 of each of the infrared lamps is only used to condense the lamplight of the infrared lamp 30, thereby having a stronger pertinence, improving a condensing effect of the condensing lens 32, and avoiding overlap irradiation among the plurality of LEDs.

Furthermore, as shown in Fig. 1, in order to avoid the lamplight of the infrared lamp 30 directly irradiating into a shooting area of the fisheye lens 20, the plurality of infrared lamps 30 are located at a side rear of the fisheye lens 20. That is, the plurality of infrared lamps 30 are located at a rear of the fisheye lens 20 to avoid the infrared lamplight directly irradiating into the fisheye lens 20; simultaneously the plurality of infrared lamps 30 are also located at side of the fisheye lens 20 to ensure that the infrared lamp 30 can fully illuminate the shooting area of the fisheye lens 20.

In order to reasonably dispose a location of the infrared lamp 30, the front end of the camera body 10 is provided with a cone 11, the fisheye lens 20 is disposed at a top end of the cone 11, and the plurality of infrared lamps 30 are spaced from each other at equal angle and are disposed on a conical surface of the cone 11. A reasonable location relation between the fisheye lens 20 and the infrared lamp 30 can be conveniently realized by disposing the cone 11.

Specifically, as shown in Fig. 2, there is an angle α between a central line A of the fisheye lens 20 and a central line B of each of the infrared lamps 30 by disposing the cone 11. Each of the infrared lamps 30 has an irradiating angle due to the condensing function of the condensing lens 32, and thus the irradiating angle of each of the infrared lamps 30 can be in the shooting range of the fisheye lens 20 by adjusting the angle α. For example, as shown in Fig. 2, the irradiating angle of each of the infrared lamps 30 is larger than or equal to 90° mostly, and the irradiating angle of the infrared lamp 30 can at least cover a scope from vertical direction y to horizontal direction x shown in Fig. 2. Generally, the angle α is in a range from about 40° to about 45°.

A combination of the plurality of infrared lamps 30 can fully irradiate the shooting range of the fisheye lens 20 and decrease the overlap irradiation area between the adjacent infrared lamps 30 by disposing the number and intervals of the infrared lamps 30 according to the irradiating angle of the infrared lamps 30. The influence to the image shooting caused by local lamplight having excessive brightness can be eliminated by decreasing overlap irradiation area. Wherein the adjustment of the angle α can be realized by adjusting a cone angle of the cone 11.

In order to protect the infrared lamps 30 and beautify the appearance of the fisheye camera, the fisheye camera of the present application may further comprise an infrared transmission lamp cover 40 placed on the plurality of infrared lamps 30. The infrared transmission lamp cover 40 can transmit the infrared lamplight and protect the infrared lamps 30 below it. Preferably, the infrared transmission lamp cover 40 is a black infrared transmission lamp cover, and a visible light cannot transmit from the infrared transmission lamp cover 40. Therefore, the improvement of the appearance can be realized and the transmission of the infrared lamplight cannot be influenced.

Specifically, as shown in Fig. 2, the infrared transmission lamp cover 40 is an annular lamp cover placed on a conical surface of the cone 11, and the fisheye lens 10 can protrude from a central hole 41 of the infrared transmission lamp cover 40. Therefore, the fisheye camera of the present application has an integrative smooth outer surface.

From the above technical solutions, the fisheye camera of the present application uses an infrared lamp having lens as a night illuminating lamp. The conventional lens used in the array of the infrared lamps, which is required to individually disposed, is disassembled in each of the infrared lamps to be individually used, and is integrated with each of the infrared lamps. Whereby the structure of the fisheye camera is simplified, a condensing effect of the condensing lens is improved, and overlap irradiation among the plurality of infrared LED is avoided.

In addition, there is an angle α between the central line of the fisheye shot and the central line of each of the infrared lamps, and an irradiating angle of each of the infrared lamps can be in a shooting range of the fisheye lens by adjusting the angle α. The number and interval of the infrared lamps can be disposed according to the irradiating angle of the infrared lamp, by which a combination of the plurality of infrared lamps can fully irradiate the shooting range of the fisheye lens and decrease the overlap irradiation area between the adjacent infrared lamps. The influence to the image shooting caused by an excessive brightness of the local lamplight can be eliminated by decreasing overlap irradiation area.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A fisheye camera having infrared lamps, comprising: a camera body (10), a fisheye lens (20) and a plurality of infrared lamps (30); wherein,
the fisheye lens is disposed at a front end of the camera body, and the plurality of infrared lamps are spaced from each other at equal angle and are disposed at outside of the fisheye lens; and
each of the plurality of infrared lamps comprises an infrared light emitting diode (31) and a transparent housing (32) for enclosing the infrared light emitting diode,
**characterized in that:**
- the transparent housing is at a certain distance from the infrared light emitting diode and provides a condensing lens at one side;
- the front end of the camera body is provided with a cone (11), the fisheye lens is disposed at a top end of the cone, and the plurality of infrared lamps are spaced from each other at equal angle and are disposed on a conical surface of the cone;
- there is an angle (α) between a central line (A) of the fisheye lens and a central line (B) of each of the plurality of infrared lamps; and
- said angle is adjustable.

2. The fisheye camera of claim 1, wherein said angle (α) being adjustable is realized by a cone angle of the cone (11) being adjustable.

3. The fisheye camera of claim 1 or 2, wherein the plurality of infrared lamps (30) are located at a side rear of the fisheye lens (20).

4. The fisheye camera of claim 1, wherein the angle (α) is in a range from about 40° to about 45°.

5. The fisheye camera of claim 1, further comprising an infrared transmission lamp cover (40) placed on the plurality of infrared lamps (30).

6. The fisheye camera of claim 5, wherein the infrared transmission lamp cover (40) is an annular lamp cover placed on a conical surface of the cone (11), and the fisheye lens (20) protrudes from a center of the infrared transmission lamp cover.

7. The fisheye camera of claim 5, wherein the infrared transmission lamp cover (40) is a black infrared transmission lamp cover.

## Patentansprüche

1. Fischaugenkamera mit Infrarotlampen, umfassend: ein Kameragehäuse (10), eine Fischaugenlinse (20) und eine Vielzahl von Infrarotlampen (30); wobei,
die Fischaugenlinse an einem vorderen Ende des Kameragehäuses angeordnet ist, und die Vielzahl von Infrarotlampen in gleichem Winkel voneinander beabstandet und an der Außenseite der Fischaugenlinse angeordnet sind; und
jede der Vielzahl von Infrarotlampen eine Infrarotlicht emittierende Diode (31) und ein transparentes Gehäuse (32) zum Einschließen der Infrarotlicht emittierenden Diode umfasst,
**dadurch gekennzeichnet, dass:**
- das transparente Gehäuse sich in einem bestimmten Abstand von der Infrarotlicht emittierenden Diode befindet und auf einer Seite eine Kondensorlinse bereitstellt;
- das vordere Ende des Kameragehäuses mit einem Kegel (11) versehen ist;
die Fischaugenlinse an einem oberen Ende des Kegels angeordnet ist, und die Vielzahl von Infrarotlampen in gleichem Winkel voneinander beabstandet und auf einer Kegelfläche des Kegels angeordnet sind;
- es einen Winkel (a) zwischen einer Mittellinie (A) der
Fischaugenlinse und eine Mittellinie (B) von jeder der Vielzahl von Infrarotlampen gibt; und
- der Winkel einstellbar ist.

2. Fischaugenkamera nach Anspruch 1, wobei der einstellbare Winkel (α) durch einen Kegelwinkel des Kegels (11) realisiert wird, der einstellbar ist.

3. Fischaugenkamera nach Anspruch 1 oder 2, wobei die Vielzahl von Infrarotlampen (30) an einer hinteren Seite der Fischaugenlinse (20) angeordnet ist.

4. Fischaugenkamera nach Anspruch 1, wobei der Winkel (α) in einem Bereich von etwa 40° bis etwa 45° liegt.

5. Fischaugenkamera nach Anspruch 1, ferner umfassend eine Infrarotübertragungslampenabdeckung (40), die an der Vielzahl von Infrarotlampen (30) angeordnet ist.

6. Fischaugenkamera nach Anspruch 5, wobei die Infrarotübertragungslampenabdeckung (40) eine ringförmige Lampenabdeckung ist, die auf einer konischen Oberfläche des Kegels (11) angeordnet ist, und die Fischaugenlinse (20) von einer Mitte der Infrarotübertragungslampenabdeckung vorsteht.

7. Fischaugenkamera nach Anspruch 5, wobei die Infrarotübertragungslampenabdeckung (40) eine schwarze Infrarotübertragungslampenabdeckung ist.

## Revendications

1. Caméra à très grand angle ayant des lampes à infrarouge comprenant : un corps de caméra (10), une lentille à très grand angle (20) et une pluralité de lampes à infrarouge (30) ; dans laquelle,
la lentille à très grand angle est disposée au niveau d'une extrémité avant du corps de caméra, et la pluralité de lampes à infrarouge sont espacées les unes des autres à un angle égal et sont disposées à l'extérieur de la lentille à très grand angle ; et
chacune de la pluralité de lampes à infrarouge comprend une diode électroluminescente infrarouge (31) et un boîtier transparent (32) pour enfermer la diode électroluminescente infrarouge,
**caractérisée en ce que** :
- le boîtier transparent est à une certaine distance de la diode électroluminescente infrarouge et fournit une lentille de condensation d'un côté ;
- l'extrémité avant du corps de caméra est prévue avec un cône (11), la lentille à très grand angle est disposée au niveau d'une extrémité supérieure du cône, et la pluralité de lampes à infrarouge sont espacées les unes des autres à un angle égal et sont disposées sur une surface conique du cône ;
- il y a un angle (α) entre une ligne centrale (A) de la lentille à très grand angle et une ligne centrale (B) de chacune de la pluralité de lampes à infrarouge ; et
- ledit angle est ajustable.

2. Caméra à très grand angle selon la revendication 1, dans laquelle ledit angle (α) qui est ajustable est réalisé par un angle de cône du cône (11) qui est ajustable.

3. Caméra à très grand angle selon la revendication 1 ou 2, dans laquelle la pluralité de lampes à infrarouge (30) est positionnée au niveau d'un côté arrière de la lentille à très grand angle (20).

4. Caméra à très grand angle selon la revendication 1, dans laquelle l'angle (α) est dans une plage d'environ 40° à environ 45°.

5. Caméra à très grand angle selon la revendication 1, comprenant en outre un couvercle de lampe de transmission d'infrarouge (40) placé sur la pluralité de lampes à infrarouge (30).

6. Caméra à très grand angle selon la revendication 5, dans laquelle le couvercle de lampe de transmission d'infrarouge (40) est un couvercle de lampe annulaire placé sur une surface conique du cône (11), et la lentille à très grand angle (20) fait saillie d'un centre du couvercle de lampe de transmission d'infrarouge.

7. Caméra à très grand angle selon la revendication 5, dans laquelle le couvercle de lampe de transmission d'infrarouge (40) est un couvercle de lampe de transmission d'infrarouge noir.
